# EUROPÄISCHE PATENTSCHRIFT

(11) **EP 2 148 103 B1**
(45) Veröffentlichungstag und Bekanntmachung des Hinweises auf die Patenterteilung: **26.01.2011**
(21) Anmeldenummer: 08013098.2
(22) Anmeldetag: 21.07.2008
(51) Int. Cl.: F16C 32/04, H02K 3/28

(54) **Magnetisches Radiallager mit Permanentmagneten zur Vormagnetisierung sowie magnetisches Lagersystem mit einem derartigen magnetischen Radiallager**
Magnetic radial bearing with bias of permanent magnets and magnetic bearing system with such a magnetic radial bearing
Palier radial magnétique avec préaimantation par des aimants permanents et système de stockage magnétique doté d'un tel palier radial magnétique

(43) Veröffentlichungstag der Anmeldung: 27.01.2010
(73) Patentinhaber: Siemens Aktiengesellschaft, 80333 München (DE)
(72) Erfinder: Vollmer, Rolf, 36129 Gersfeld (DE)

(56) Entgegenhaltungen:
- DE-A1- 19 852 460
- DE-A1- 19 852 762
- DE-A1-102006 026 402
- JP-A- 11 101 234
- US-A- 4 794 290
- US-A- 5 237 229
- US-B1- 6 700 259

## Beschreibung

Die Erfindung betrifft ein magnetisches Radiallager zur berührungslosen Lagerung einer Rotorwelle, wobei das magnetische Radiallager einen Drehfeldmaschinenstator mit einer Anzahl n von in Umfangrichtung verteilt angeordneten Statornuten und einer gleichen Anzahl n von dazwischenliegenden Statorzähnen aufweist. Die Statornuten sind mit einer mehrphasigen Statorwicklung zur Erzeugung eines magnetischen Drehfeldes bewickelt, wobei an jedem radialen Ende der Statorzähne ein axial verlaufender, streifen- oder plattenförmiger Permanentmagnet angeordnet ist und wobei die Permanentmagnete eine in Umfangsrichtung abwechselnde, radiale Magnetisierungsrichtung aufweisen. Derartige Lager werden auch als aktive magnetische Lager oder aktive Magnetlager bezeichnet.

Die Erfindung betrifft weiterhin ein magnetisches Lagersystem, welches ein derartiges magnetisches Radiallager sowie einen mehrphasigen Drehstromsteller für die Drehfelderregung aufweist. Der Drehstromsteller ist vorzugsweise ein Umrichter.

Mit "radial" sind Richtungen zu einer Drehachse der aufgenommenen Rotorwelle und weg von ihr bezeichnet. Mit "axial" sind Richtungen parallel zur Drehachse und mit "in Umfangsrichtung" tangentiale Richtungen um die Drehachse der Rotorwelle bezeichnet. Bei betrieblicher Lagerung der Rotorwelle entspricht die Drehachse der Rotorwelle faktisch einer konstruktiven Rotationsachse bzw. Rotationssymmetrieachse des magnetischen Radiallagers.

Ein derartiges aktives magnetisches Lager ist aus dem US-Patent US 4,794,290 A bekannt.

Aus dem Patent Abstracts of Japan JP 11 101234 A ist ein derartiges magnetisches Radiallager bekannt, bei dem sich die Anzahl der Permanentmagnetpole um ±2 von der Anzahl der elektromagnetischen, über das Drehfeld erzeugten Magnetpole unterscheidet. Bei zwei dortigen Ausführungsformen gemäß FIG 9 und FIG 10 ist die Anzahl von Statornuten, Statorzähnen und dazwischenliegenden Permanentmagneten ebenfalls gleich. Allerdings weisen die Permanentmagnete keine in Umfangsrichtung direkt aufeinanderfolgende, abwechselnde, radiale Magnetisierungsrichtung auf.

Aus der internationalen Veröffentlichung WO 01/48389 A1 ist ein magnetisches Lagersystem, bestehend aus mindestens einem Radiallager, wenigstens einer Ansteuereinheit sowie Statorund Rotorelementen zur Erzeugung von radialen Kräften bekannt. Die flussbildenden und flussführenden Stator- und Rotorelemente werden aus ferromagnetischen Teilen, Spulen und Permanentmagneten gebildet. In dem Stator des Radiallagers sind zwischen elektromagnetischen Polen mit mindestens einer Spule ein oder mehrere Permanentmagnete vorgesehen, die als magnetische Pole ausgebildet sind. Sie sind in der Weise ausgebildet, dass im Luftspalt in den Winkelbereichen der elektromagnetischen Pole ein magnetischer Spannungsabfall durch die von den Permanentmagneten erzeugten Flüsse entsteht.

Aktive magnetische Lager sind zur berührungslosen, verschleißfreien Lagerung einer Rotorwelle einer rotierenden Maschine vorgesehen. Die betrachteten Maschinen können eine Masse von mehr als einer Tonne und eine elektrische Nennleistung von mehr als 500 kW, insbesondere von mehreren Megawatt, aufweisen. Derartige Maschinen sind z.B. Elektromotoren, Generatoren, Turbomaschinen, Kompressoren, Pumpen und dergleichen. Sie können eine maximale Drehzahl von 4000 U/min und mehr aufweisen. Im betriebsmäßigen Einsatz wird ein Luftspalt vorzugsweise im Bereich von 0,3 mm bis 0,5 mm zwischen dem magnetischen Radiallager und der zu lagernden Rotorwelle aufrechterhalten.

Ausgehend von dem eingangsgenannten Stand der Technik ist es eine Aufgabe der Erfindung, ein magnetisches Radiallager mit einem besonders einfachen, konstruktiven Aufbau anzugeben.

Es ist eine weitere Aufgabe der Erfindung, ein magnetisches Lagersystem mit einem derartigen magnetischen Radiallager anzugeben.

Die Aufgabe der Erfindung wird durch ein magnetisches Radiallager mit den Merkmalen des Patentanspruchs 1 gelöst. Vorteilhafte Ausführungsformen sind in den abhängigen Ansprüchen 2 bis 5 angegeben. Im Anspruch 6 ist ein magnetisches Lagersystem mit einem erfindungsgemäßen magnetischen Radiallager genannt.

Erfindungsgemäß ist die mehrphasige Statorwicklung eine dreiphasige Drehstromwicklung mit einer Lochzahl q = 2/5. Die Lochzahl ist dabei der Quotient aus der Anzahl der Statornuten dividiert durch die Anzahl der Phasen sowie der Anzahl der elektromagnetischen, über das Drehfeld erzeugten Magnetpole.

Besonders vorteilhaft ist es, wenn der Drehfeldmaschinenstator zwölf Statornuten sowie zwölf Permanentmagnete aufweist. Das Permanentmagnetfeld weist dann eine Polpaarzahl pᵥ von sechs und das dreiphasige Drehfeld eine Polpaarzahl p_{D} von fünf bei entsprechender Erregung durch einen angeschlossenen, dreiphasigen Drehstromsteller auf. Ein derartiges magnetisches Radiallager weist vorteilhaft einen konstruktiv sehr einfachen und äußerst kompakten Aufbau auf.

Nach einer Ausführungsform des magnetischen Radiallagers weisen die Permanentmagnete einen rechteckigen oder ringsegmentförmigen Querschnitt auf. Im letzteren Fall sind die Permanentmagnete aufgrund ihrer gekrümmten Außenform bündig an das jeweilige radiale Ende der Statorzähne anbringbar.

Ist ein maximaler radialer Abstand der Permanentmagnete kleiner als ein minimaler radialer Abstand der Statornuten, so vereinfacht sich der Aufbau des erfindungsgemäßen Radiallagers nochmals.

Vorzugsweise liegt eine radiale Dicke der Permanentmagnete in einem Bereich des 0,1- bis 0,5-Fachen einer radialen Tiefe der Statornuten. Ein typischer Wert liegt im Bereich des 0,3-Fachen.

Schließlich liegt das Verhältnis von einem Innendurchmesser des magnetischen Radiallagers zu seiner axialen Länge in einem Bereich von 0,3 bis 2, vorzugsweise in einem Bereich von 0,8 bis 1,25. In besonderen Anwendungsfällen kann das Verhältnis auch darunter liegende Werte, wie z.B. 0,2, oder darüber liegende Werte, wie z.B. 3, aufweisen.

Die Aufgabe der Erfindung wird weiterhin durch ein magnetisches Lagersystem mit einem erfindungsgemäßen magnetischen Radiallager und mit einem mehrphasigen Drehstromsteller für die Drehfelderregung gelöst.

Die Erfindung sowie vorteilhafte Ausführungsformen der Erfindung sind am Beispiel der nachfolgenden Figuren dargestellt. Dabei zeigen:
- FIG 1: eine rotierende Maschine mit einem magnetischen Radial- lager zur berührungslosen Lagerung einer Rotorwelle,
- FIG 2: ein magnetisches Lagersystem mit einem Drehstromsteller in Form eines Umrichters und mit einem nachgeschalte- ten, magnetischen Radiallager in einem Schaltbild,
- FIG 3: einen axialen Schnitt durch ein beispielhaftes erfin- dungsgemäßes magnetisches Radiallager und
- FIG 4: eine vergrößerte Darstellung des in FIG 3 gezeigten oberen Teils des erfindungsgemäßen magnetischen Radial- lagers.

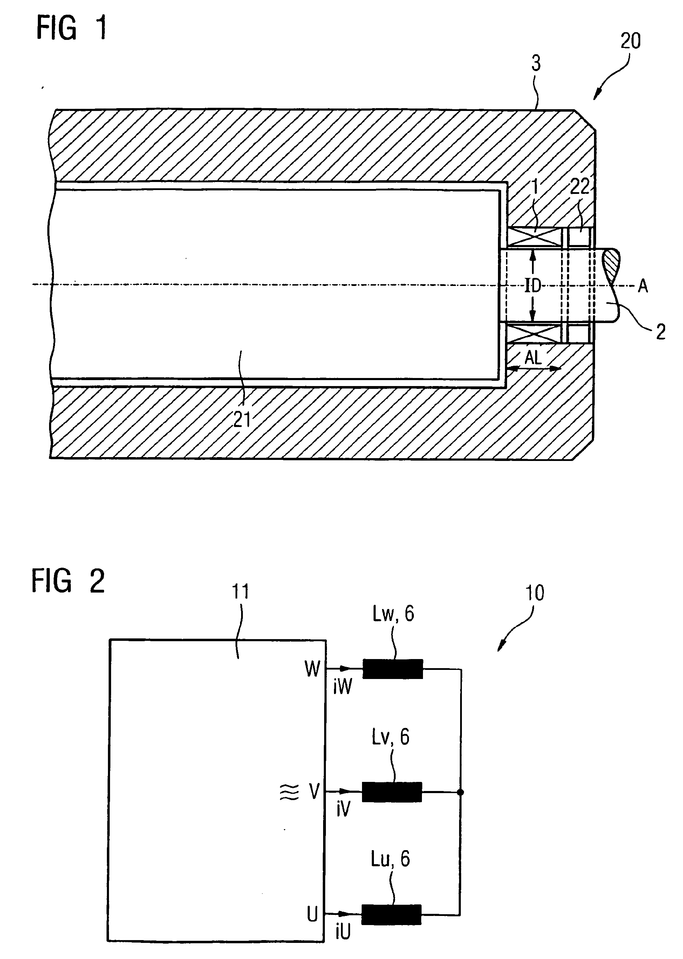

FIG 1 zeigt eine rotierende Maschine 20 mit einem magnetischen Radiallager 1 zur berührungslosen Lagerung einer Rotorwelle 2. Mit dem Bezugszeichen A sind eine Drehachse der Rotorwelle 2, mit AL eine axiale Länge des magnetischen Radiallagers 1 und mit ID ein Innendurchmesser des Radiallagers 1 bezeichnet. Bei der gezeigten rotierenden Maschine 20 handelt es sich beispielhaft um einen Elektromotor mit einem Rotorpaket 21 und einem mit dem Bezugszeichen 3 bezeichneten Drehfeldmaschinenstator. Die rotierende Maschine 20 kann weiterhin eine Pumpe, ein Kompressor, eine Spindel oder eine sonstige rotierende Maschine sein. Vorzugsweise handelt es sich bei den rotierenden Maschinen 20 um Turbomaschinen. Mit dem Bezugszeichen 22 ist ein sogenanntes Fanglager bezeichnet, welches die Rotorwelle 2 bei Wegfall der Stromversorgung für das magnetische Radiallager 1 aufnimmt.

FIG 2 zeigt ein magnetisches Lagersystem 10 mit einem als Umrichter ausgebildeten Drehstromsteller 11 und mit einem ausgangsseitig angeschlossenen magnetischen Radiallager 1, wobei in schaltungstechnischer Hinsicht lediglich die beispielhaft drei Spulen Lu, Lv, Lw einer Statorwicklung 6 des magnetischen Radiallagers 1 dargestellt sind. Mit U, V, W sind die Phasen des Drehstromstellers 11, mit iU, iV, iW die zugehörigen Phasenströme für die Drehfelderregung bezeichnet.

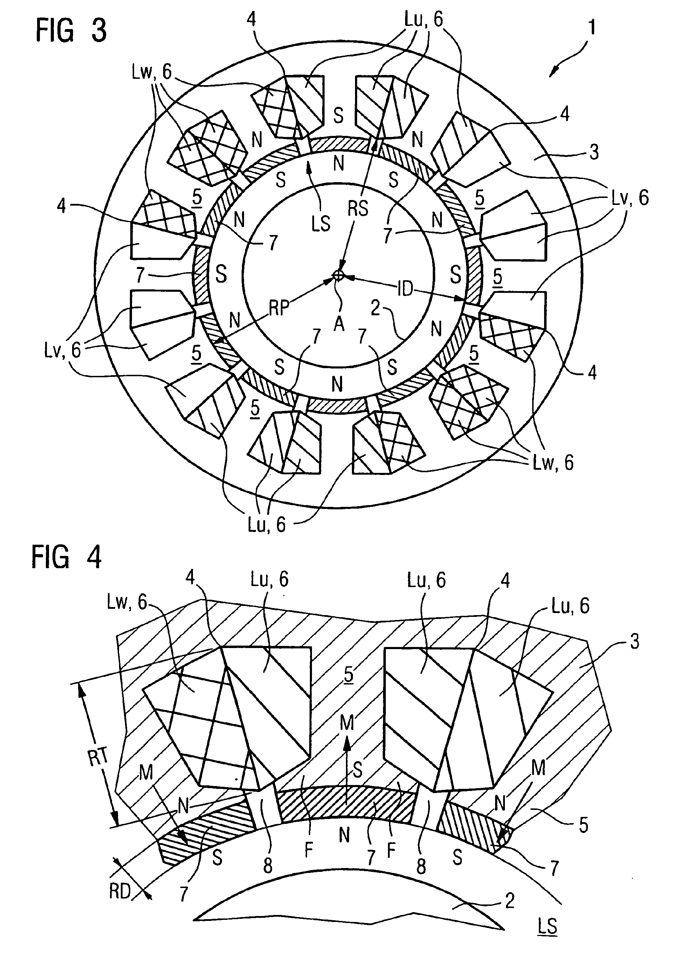

FIG 3 zeigt einen axialen Schnitt durch ein erfindungsgemäßes magnetisches Radiallager 1. Der mit dem Bezugszeichen 3 bezeichnete Drehfeldmaschinenstator ist vorzugsweise ein Blechpaket mit einer Vielzahl von axial hintereinander angeordneten Dynamoblechen zur Reduzierung der beim Betrieb des Magnetlagers 1 auftretenden Wirbelstromverluste. Das gezeigte magnetische Radiallager 1 weist beispielhaft zwölf Statornuten 4 auf, in welche eine beispielhaft dreiphasige Statorwicklung 6 mit den zugehörigen dreiphasigen Spulen Lu, Lv, Lw eingebracht sind. Die Bewicklung der Nuten erfolgt zum Einstellen einer Polpaarzahl p_{D} z.B. gesehnt. Mit "gesehnter" Statorwicklung bzw. Drehstromwicklung ist gemeint, dass zwei oder mehrere Phasenstränge einer Spule Lu, Lv, Lw zusammen mit anderen Phasensträngen in einer gemeinsamen Nut eingebracht sein können. Mit dem Bezugszeichen 5 sind die zwischen den Statornuten 4 liegenden Statorzähne bezeichnet.

Erfindungsgemäß ist nun an jedem radialen Ende der Statorzähne 5 ein axial verlaufender, streifen- oder plattenförmiger Permanentmagnet 7 angeordnet. Die Permanentmagnete 7 weisen eine in Umfangsrichtung abwechselnde, radiale Magnetisierungsrichtung M. Dies ist durch einen eingetragenen Pfeil dargestellt, welcher sich von einem magnetischen Nordpol N zu einem magnetischen Südpol S des jeweiligen Permanentmagneten 7 zeigt. Im Zentrum des gezeigten magnetischen Radiallagers 1 ist im Schnitt die aufgenommene Rotorwelle 2 gezeigt, welche sich um eine Drehachse A dreht. Zwischen der Rotorwelle 2 und der radialen Innenseite des magnetischen Radiallagers 1 ist ein Luftspalt LS vorhanden. Dieser beträgt bei ordnungsgemäßer magnetischer Lagerung ca. 0,3 mm bis 0,5 mm. Wie das Beispiel der FIG 3 weiter zeigt, ist ein maximaler radialer Abstand RP der Permanentmagnete 7 kleiner als ein minimaler radialer Abstand RS der Statornuten 4.

FIG 4 zeigt eine vergrößerte Darstellung des oberen Teils des in FIG 3 gezeigten Drehfeldmaschinenstators 3. In dieser Darstellung ist ein ringsegmentförmiger Querschnitt der Permanentmagnete 7 erkennbar. Die radiale Außenkontur der Permanentmagnete 7 ist somit geometrisch auf die radiale Innenkontur der Statorzähne 5 abgestimmt. Dabei liegt eine radiale Dicke RD der gezeigten Permanentmagnete 7 in einem Bereich des 0,1- bis 0,5-Fachen einer radialen Tiefe RT der Statornuten 4. Im vorliegenden Beispiel liegt die radiale Dicke RD bei ca. dem 0,3-Fachen. Zur verbesserten Feldführung sind die Statorzähne 5 tangential in radialer Richtung zur Drehachse A hin erweitert. Die Statornuten 5 bilden in diesen Bereich, der an die Permanentmagnete 7 grenzt, einen Fuß F aus. Zwischen den Permanentmagneten 7 bzw. zwischen jeweils zwei benachbarten Statorzähnen 5 verbleibt eine axial verlaufende Nut oder Lücke 8. Diese kann gegebenenfalls mit einem vorzugsweise nicht magnetischen Werkstoff, wie z.B. mit einem Kunststoff, ausgefüllt sein. Dadurch wird die mechanische Fixierung der Permanentmagnete 7 an der radialen Innenseite des Drehfeldmaschinenstators 3 erhöht.

Das erfindungsgemäße magnetische Radiallager 1 weist eine dreiphasige Drehstromwicklung 6 mit einer Lochzahl q = 2/5 auf. Diese resultiert aus der Anzahl n von zwölf für die Permanentmagnete 7, welche ein Permanentmagnetfeld mit einer Polpaarzahl pᵥ von sechs erzeugen, und aus der dreiphasigen Drehstromwicklung 6 mit entsprechend gesehnter Verteilung der jeweiligen Phasenstränge Lu, Lv, Lw mit einer Polpaarzahl p_{D} von fünf. Mit anderen Worten wird bei einer dreiphasigen Erregung der Drehstromwicklung 6 mittels eines dreiphasigen Drehstromstellers 11 ein elektromagnetisches, in seiner Drehrichtung um die Drehachse A einstellbares zehnpoliges Magnetfeld erzeugt.

## Patentansprüche

1. Magnetisches Radiallager zur berührungslosen Lagerung einer Rotorwelle (2), wobei das magnetische Radiallager einen Drehfeldmaschinenstator (3) mit einer Anzahl n von in Umfangrichtung verteilt angeordneten Statornuten (4) und einer gleichen Anzahl n von dazwischenliegenden Statorzähnen (5) aufweist, wobei die Statornuten (4) mit einer mehrphasigen Statorwicklung (6) zur Erzeugung eines magnetischen Drehfeldes bewickelt sind, wobei an jedem radialen Ende der Statorzähne (5) ein axial verlaufender, streifen- oder plattenförmiger Permanentmagnet (7) angeordnet ist und wobei die Permanentmagnete (7) eine in Umfangsrichtung abwechselnde, radiale Magnetisierungsrichtung (M) aufweisen,
**dadurch gekennzeichnet, dass** die mehrphasige Statorwicklung (6) eine dreiphasige Drehstromwicklung mit einer Lochzahl q = 2/5 ist.

2. Magnetisches Radiallager nach Anspruch 1, **dadurch gekennzeichnet, dass** der Drehfeldmaschinenstator (3) zwölf Statornuten (4) sowie zwölf Permanentmagnete (7) aufweist und dass das Permanentmagnetfeld eine Polpaarzahl pᵥ von 6 und das dreiphasige Drehfeld eine Polpaarzahl p_{D} von 5 bei entsprechender Erregung durch einen angeschlossenen, dreiphasigen Drehstromsteller (11) aufweist.

3. Magnetisches Radiallager nach Anspruch 1 oder 2, **dadurch gekennzeichnet, dass** die Permanentmagnete (7) einen rechteckigen oder ringsegmentförmigen Querschnitt aufweisen.

4. Magnetisches Radiallager nach einem der Ansprüche 1 bis 3, **dadurch gekennzeichnet, dass** ein maximaler radialer Abstand (RP) der Permanentmagnete (7) kleiner ist als ein minimaler radialer Abstand (RS) der Statornuten (4).

5. Magnetisches Radiallager nach einem der Ansprüche 1 bis 4, **dadurch gekennzeichnet, dass** eine radiale Dicke (RD) der Permanentmagnete (7) in einem Bereich des 0,1- bis 0,5-fachen einer radialen Tiefe (RT) der Statornuten (4) liegt.

6. Magnetisches Lagersystem mit einem magnetischen Radiallager (1) nach einem der vorangegangenen Ansprüche und mit einem mehrphasigen Drehstromsteller (11) für die Drehfelderregung.

## Claims

1. Magnetic radial bearing for non-contacting bearing of a rotor shaft (2), with the magnetic radial bearing having a rotating-field machine stator (3) with a number n of stator slots (4), which are arranged distributed in the circumferential direction, and an equal number n of stator teeth (5) between them, with the stator slots (4) being wound with a polyphase stator winding (6) in order to produce a magnetic rotating field, with a permanent magnet (7) which runs axially and is in the form of a strip or plate being arranged at each radial end of the stator teeth (5), and with the permanent magnets (7) having a radial magnetization direction (M) which alternates in the circumferential direction, **characterized in that** the polyphase stator winding (6) is a three-phase winding with a number of holes q = 2/5.

2. Magnetic radial bearing according to Claim 1, **characterized in that** the rotating-field machine stator (3) has twelve stator slots (4) and twelve permanent magnets (7) and **in that** the permanent magnetic field has six pole pairs pᵥ and the three-phase rotating field has five pole pairs p_{D}, with corresponding excitation by a connected three-phase control 11, with corresponding excitations by a connected, three-phase controller (11).

3. Magnetic radial bearing according to Claim 1 or 2, **characterized in that** the permanent magnets (7) have a rectangular cross section or a cross section in the form of an annular segment.

4. Magnetic radial bearing according to one of Claims 1 to 3, **characterized in that** a maximum radial distance (RP) between the permanent magnets (7) is less than a minimum radial distance (RS) between the stator slots (4).

5. Magnetic radial bearing according to one of Claims 1 to 4, **characterized in that** a radial thickness (RD) of the permanent magnets (7) is in the region of 0.1 to 0.5 times a radial depth (RT) of the stator slots (4).

6. Magnetic bearing system having a magnetic radial bearing (1) according to one of the preceding claims and having a polyphase controller (11) for rotating-field excitation.

## Revendications

1. Palier radial magnétique pour le support sans contact d'un arbre ( 2 ) de rotor, dans lequel le palier radial magnétique a un stator ( 3 ) de machine à champ tournant ayant un nombre n d'encoches ( 4 ) de stator réparties dans la direction de la périphérie et un même nombre n de dents ( 5 ) de stator interposées, les encoches ( 4 ) de stator étant bobinées d'un enroulement ( 6 ) de stator polyphasé pour la production d'un champ magnétique tournant, un aimant ( 7 ) permanent, s'étendant axialement et en forme de bande ou de plaque, étant disposé à chaque extrémité radiale des dents ( 5 ) de stator et les aimants ( 7 ) permanents ayant une direction ( M ) d'aimantation radiale alternant dans la direction périphérique,
**caractérisé en ce que** l'enroulement ( 6 ) de stator polyphasé est un enroulement de courant triphasé ayant un indice de trou q = 2/5.

2. Palier radial magnétique suivant la revendication 1, **caractérisé en ce que** le stator ( 3 ) de machine à champ tournant a douze encoches ( 4 ) de stator ainsi que douze aimants ( 7 ) permanents et **en ce que** le champ magnétique permanent a un nombre pv de paires de pôle de 6 et le champ tournant triphasé a un nombre de paires de pôle pD de 5 pour une excitation correspondante par un régleur ( 11 ) de courant triphasé raccordé.

3. Palier radial magnétique suivant la revendication 1 ou 2, **caractérisé en ce que** les aimants ( 7 ) permanents ont une section transversale rectangulaire ou en forme de segment annulaire.

4. Palier radial magnétique suivant l'une des revendications 1 à 3, **caractérisé en ce qu'**une distance ( RP ) radiale maximum entre les aimants ( 7 ) permanents est plus petite qu'une distance ( RS ) radiale minimum entre les encoches ( 4 ) du stator.

5. Palier radial magnétique suivant l'une des revendications 1 à 4, **caractérisé en ce qu'**une épaisseur ( RD ) radiale des aimants ( 7 ) permanents se trouve dans une plage de 0,1 à 0,5 fois une profondeur ( RT ) radiale des encoches ( 4 ) de stator.

6. Système de palier magnétique comprenant un palier ( 1 ) radial magnétique suivant l'une des revendications précédentes et un régleur ( 11 ) de courant polyphasé pour l'excitation à champ tournant.
